# EUROPÄISCHE PATENTSCHRIFT

(11) **EP 1 847 808 B1**
(45) Veröffentlichungstag und Bekanntmachung des Hinweises auf die Patenterteilung: **09.07.2008**
(21) Anmeldenummer: 06008148.6
(22) Anmeldetag: 20.04.2006
(51) Int. Cl.: G01D 1/10, G01D 1/16

(54) **Sensoranordnung mit Sensor und Signalverarbeitungseinrichtung**
Sensor system comprising sensor and signal processing device
Dispositif de détection pourvu d'un capteur et d'un dispositif de traitement du signal

(43) Veröffentlichungstag der Anmeldung: 24.10.2007
(73) Patentinhaber: FESTO AG & Co. KG, 73734 Esslingen (DE)
(72) Erfinder: Wagner, Dietmar, 73230 Kirchheim (DE); Seitz, Armin, 76351 Linkenheim (DE)
(74) Vertreter: Vetter, Hans

(56) Entgegenhaltungen:
- EP-A- 1 203 933
- DE-A1- 3 115 149
- DE-A1- 3 506 705
- DE-A1- 4 018 639
- DE-U1- 9 310 253

## Beschreibung

Die Erfindung betrifft eine Sensoranordnung mit den Merkmalen des Oberbegriffs des Anspruchs 1. Bei einer derartigen, aus der DE 31 15 149 A1 bekannten Sensoranordnung wird die erste zeitliche Ableitung eines Sensorsignals in einem Komparator mit einem Grenzwert verglichen, um ein Schaltsignal zu bilden. Hierdurch soll bei schnellen Signaländerungen ein frühes Warnsignal als Schaltsignal erzeugt werden.

Aus der DE 93 10 253 U1 ist eine Temperaturüberwachungseinrichtung bekannt, welche bei Erreichen vorgegebener Widerstandswerte der Temperatursensoren Schaltsignale zur Ansteuerung von Schutzvorrichtungen erzeugt. Nur bei Überschreiten eines jeweils fest vorgegebenen Widerstandswertes wird ein Schaltsignal erzeugt, wenn die Widerstandsänderung pro Zeiteinheit einen vorgegebenen Wert nicht überschreitet.

Schließlich ist aus der DE 35 06 705 A1 eine Anordnung zur Gewinnung eines Ölmangelsignals bekannt, wobei der Differenzialquotient des Öldrucks bei Überschreitung eines bestimmten festen Schwellwerts zur Erzeugung eines Ölmangelsignals verwendet wird.

Eine Aufgabe der vorliegenden Erfindung besteht darin, eine Sensoranordnung so auszubilden, dass einfach zu verarbeitende binäre Schaltsignale, insbesondere zur Prozesssteuerung, erzeugt werden, die nicht nur vom Vergleichs- und Schaltwert abhängen, sondern noch weitere Parameterfunktionen beinhalten.

Diese Aufgabe wird erfindungsgemäß durch eine Sensoranordnung mit den Merkmalen des Anspruchs 1 gelöst.

Die Vorteile der erfindungsgemäßen Sensoranordnung bestehen insbesondere darin, dass einfach zu verarbeitende binäre Schaltsignale erzeugt werden, die nicht nur vom Messparameter abhängen, sondern bereits auch noch gewünschte Funktionen des Messparameters oder sonstiger Parameter beinhalten. Eine entsprechende aufwendige Programmierung eines üblicherweise analogen Sensorausgangssignals kann entfallen. Vorteilhaftweise kann der Schaltausgang der Schaltstufe blockiert werden, solange sich das Eingangssignal noch verändert. Hierdurch kann beispielsweise eine Schaltunterdrückung bei schnellem Durchfahren eines Schaltbereiches erreicht werden.

Durch die in den Unteransprüchen aufgeführten Maßnahmen sind vorteilhafte Weiterbildungen und Verbesserungen der im Anspruch 1 angegebenen Sensoranordnung möglich.

Die Schaltstufe ist zweckmäßigerweise als Komparator, insbesondere als Fensterkomparator, ausgebildet.

In einer ersten vorteilhaften Ausgestaltung der Sensoranordnung besteht die Funktionsstufe aus einer die erste oder zweite zeitliche Ableitung des Sensorsignals bildenden Differentialstufe und einer Schwellwertstufe für das Ausgangssignal der Differentialstufe, deren Ausgangssignal wiederum das Sperr- bzw. Durchlasssignal für das Schaltsignal bildet. Hierzu ist eine insbesondere als UND-Glied ausgebildete Sperr- und Durchlassstufe für das Schaltsignal mit dem Sperr/Durchlasssignal als Steuersignal beaufschlagbar. Bei einer Ausbildung der Schaltstufe als Fensterkomparator wird beispielweise ein Schaltsignal nur dann erzeugt, wenn eine in diesem Bereich ablaufende Signaländerung unterhalb eines einstellbaren Grenzwerts liegt.

In einer weiteren vorteilhaften Ausgestaltung der Sensoranordnung besteht die Funktionsstufe aus einer die zeitliche Ableitung des Sensorsignals bildenden Differentialstufe und einer die Funktion so - k x s' bildenden Teilfunktionsstufe, wobei das Ausgangssignal der Teilfunktionsstufe den Vergleichs- oder Schaltwert bildet und wobei so ein vorgebbarer Messparameter-Grenzschaltwert und k ein vorgebbarer Faktor ist. Wird beispielsweise als vorgebbarer Messparameter-Grenzschaltwert ein einen weiteren Schaltvorgang auslösender Schaltpositionswert gewählt, so kann geschwindigkeitsabhängig ein Auslösezeitpunkt für den weiteren Vorgang kurz vor Erreichen dieser Schaltposition generiert werden.

In einer weiteren vorteilhaften Ausgestaltung besteht die Funktionsstufe aus einer Speicherstufe für das Sensorsignal zu einem vorgebbaren Zeitpunkt und einer Additionsstufe zur Addition des gespeicherten Sensorsignals mit einem Offsetwert, wobei das Ausgangssignal der Additionsstufe den Vergleichs- oder Schaltwert bildet. Bei dieser Ausgestaltung wird beispielsweise ein Positionssignal bei einem bestimmten Ereignis in der Speicherstufe gespeichert und dann mit dem Offsetwert addiert, wobei dann bei Erreichen dieses Funktionswerts das Schaltsignal ausgelöst wird.

Als Messparameter dient beispielsweise eine Position oder Bewegung oder ein Druck oder eine Kraft oder ein Durchfluss.

Drei Ausführungsbeispiele der Erfindung sind in der Zeichnung dargestellt und in der nachfolgenden Beschreibung näher erläutert. Es zeigen:
- Figur 1: ein erstes Ausführungsbeispiel als Blockschaltbild mit einer Differentialstufe und einer Schwellwertstufe als Funktionsstufe,
- Figur 2: ein zweites Ausführungsbeispiel im Blockschaltbild mit einer Differentialstufe und einer eine Funktion der zeitlichen Ableitung bildenden Teilfunktionsstufe als Funktionsstufe und
- Figur 3: ein drittes Ausführungsbeispiel der Erfindung im Blockschaltbild mit einer Speicherstufe und einer Additionsstufe als Funktionsstufe.

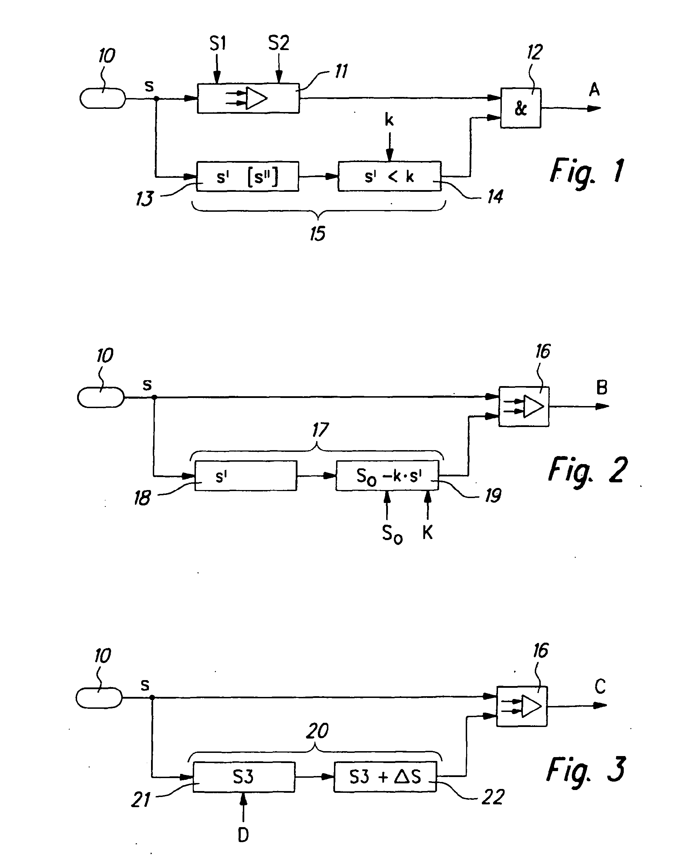

Bei der in Figur 1 dargestellten Sensoranordnung ist ein Sensor 10 zum Erfassen eines Messparameters, wie einer Position, einer Bewegung, eines Drucks oder einer Kraft oder eines sonstigen Parameters, über einen Fensterkomparator 11 mit einem Eingang eines UND-Glieds 12 verbunden. Weiterhin ist der Ausgang des Sensors 10 über eine Differentialstufe 13 zum Bilden der ersten zeitlichen Ableitung s' des Sensorsignals s und einer Schwellwertstufe 14 verbunden, die ein Ausgangssignal erzeugt, wenn der Wert der ersten Ableitung s' kleiner als ein vorgebbarer Grenzwert k ist. Die Differentialstufe 13 bildet zusammen mit der Schwellwertstufe 14 eine Funktionsstufe 15. Das Ausgangssignal der Schwellwertstufe 14 ist an den zweiten Eingang des UND-Glieds 12 gelegt und bildet ein Sperr- beziehungsweise Durchlasssignal für das Ausgangssignal des Fensterkomparators 11, das im Durchlassfall, also bei einem Signal am Ausgang der Schwellwertstufe 14, am Ausgang der Sensoranordnung ein digitales Schaltsignal A erzeugt.

Die Differentialstufe 13 kann auch zur Bildung der zweiten Ableitung s" des Sensorsignals s ausgebildet sein. Weiterhin kann die Schwellwertstufe 14 je nach Anwendungsfall unterschiedlich konfiguriert werden, also beispielsweise auch ein Ausgangssignal erzeugen, wenn ein Grenzwert k überschritten ist oder wenn die erste oder zweite Ableitung zwischen zwei Grenzwerten liegt. Alternativ zum UND-Glied 12 kann auch eine andere Sperr- und Durchlassstufe eingesetzt werden, die das Ausgangssignal des Fensterkomparators 11 in Abhängigkeit des Ausgangssignals der Schwellwertstufe 14 sperrt oder durchlässt.

Eine praktische Anwendung des in Figur 1 dargestellten Ausführungsbeispiels ist beispielsweise eine Greiferapplikation. Der Sensor 10 misst die Position des Greifers, also beispielsweise den Abstand der Greiferbacken. Beim Greifen eines Bauteils fährt der Greifer in eine Position, die zwischen den Positionen S1 und S2 als Grenzpositionen des Fensterkomparators 11 ist. Wenn der Greifer das Bauteil erfasst hat, geht seine Geschwindigkeit auf den Wert null und liegt somit unterhalb des Grenzwerts k. Da sich die Position innerhalb des Fensterbereichs des Fensterkomparators 11 befindet, wird ein Schaltsignal A erzeugt, das die korrekte Position des Greifers am Bauteil anzeigt.

Wenn der Greifer jedoch im Fehlerfall kein Bauteil greift, durchfährt er mit einer Geschwindigkeit größer als der Grenzwert k den Fensterbereich, sodass ein Fehlschaltsignal verhindert wird, das beispielsweise eine falsche Prozesskette auslösen könnte.

Eine weitere Anwendung des in Figur 1 dargestellten Ausführungsbeispiels ist die Leckageüberwachung in der Fluidsensorik. Der Sensor 10 ist dabei als Drucksensor ausgebildet. Wird bei einem eingestellten Druckfenster durch den Fensterkomparator 11 zusätzlich die Änderungsgeschwindigkeit des Drucksignals ausgewertet, so führt dies zu einem qualitativen Rückschluss auf die Dichtheit einer Komponente. Die maximal zugelassene Leckrate kann dabei durch den Grenzwert k eingestellt werden.

Bei dem in Figur 2 dargestellten zweiten Ausführungsbeispiel ist der Sensor 10 sowohl direkt mit einem Eingang eines Komparators 16 als auch über eine Funktionsstufe 17 mit dem zweiten Eingang dieses Komparators 16 verbunden. Die Funktionsstufe 17 besteht aus einer Differentialstufe 18 zur Bildung der ersten zeitlichen Ableitung s' des Sensorsignals s und einer Teilfunktionsstufe 19 zur Bildung der Funktion so - k x s', wobei so ein vorgebbarer Messparameter-Grenzschaltwert und k ein vorgebbarer Faktor ist. s₀ und k können an der Teilfunktionsstufe 19 variabel angelegt oder fest oder einstellbar gespeichert sein.

Der Komparator 16 erzeugt ausgangsseitig ein digitales Schaltsignal B, wenn das Sensorsignal mit dem Ausgangssignal der Funktionsstufe 17 übereinstimmt. Dabei kann der Komparator 16 beispielsweise auch als Schwellwertstufe ausgebildet sein, deren Schwellwert durch das Ausgangssignal der Funktionsstufe 17 vorgegeben wird.

Ein Anwendungsfall des zweiten Ausführungsbeispiels in der Praxis ist beispielsweise die Taktzeitoptimierung von positionsabhängigen Handling-Prozessen. Dabei sollen Ablaufprozesse optimiert und dadurch die Taktzeit erhöht werden. Beispielsweise sollen zwei Zylinder Z1 und Z2 in einem Automatisierungsablauf unterschiedliche Aufgaben ausführen, die aufeinanderfolgen sollen. Ein Schaltsignal am Zylinder Z1 löst den Vorgang am Zylinder Z2 aus. Um nun Totzeiten, die sich durch Signallaufzeiten, Ventilschaltzeiten, Druckaufbau usw. ergeben, kompensieren zu können, soll der Vorgang am Zylinder Z2 schon kurz vor dem Zeitpunkt ausgelöst werden, zu dem der Zylinder Z1 seine End- oder Auslöseposition erreicht hat. Hierzu wird die Änderungsgeschwindigkeit des Zylinders Z1 beziehungsweise dessen Kolbens unmittelbar vor dem Schaltpunkt zur Auslösung des Zylinders Z2 beobachtet und durch die Funktionsstufe 17 erfasst. Die Änderungsgeschwindigkeit wird mit dem Faktor k multipliziert, der von keiner anderen Größe abhängt und es somit zusätzlich erlaubt, das Vorziehen des Schaltpunkts systemspezifisch anzupassen. Die Größe des Produktes k x s' bestimmt somit, um wie viel der Schaltpunkt vorgezogen wird, also um wie viel früher das den Vorgang am Zylinder Z2 startende Signal B erzeugt wird. Der Messparameter-Grenzschaltwert s₀ entspricht dabei derjenigen Position des Zylinders Z1, zu dem eigentlich, also ohne Vorziehen des Schaltpunktes, der Zylinder Z2 ausgelöst werden muss.

Eine weitere Anwendung des zweiten Ausführungsbeispiels ist die Taktzeitoptimierung in fluidtechnischen Anwendungen, beispielsweise bei Befüllvorgängen in der Fluidsensorik. Hierzu ist der Sensor 10 als Fluss- beziehungsweise Strömungssensor ausgebildet und zeichnet den Befüllvorgang kontinuierlich auf. Überwacht man dadurch die zeitliche Änderung des Befüllens, so ist es möglich, vor dem eigentlichen Verbrauchsschaltpunkt, der den Zufluss eines Gases nach Erreichen eines gewissen Mindestvolumens stoppt, nachfolgende Vorgänge entsprechend früher und somit taktzeitoptimiert zu starten.

Bei dem in Figur 3 dargestellten dritten Ausführungsbeispiel der Sensoranordnung ist der Sensor 10 sowohl direkt mit einem Eingang des Komparators 16 als auch über eine Funktionsstufe 20 mit dem zweiten Eingang des Komparators 16 verbunden. Die Funktionsstufe 20 besteht dabei aus einer Signalspeicherstufe 21 und einer Additionsstufe 22 zur Addition des jeweils in der Signalspeicherstufe 21 gespeicherten Speicherwerts mit einem Offsetwert Δs. Die Signalspeicherstufe 21 speichert das jeweils anliegende Sensorsignal s als Speicherwert s3, wenn ein Einspeichersignal D als Triggersignal für den Speichervorgang angelegt wird. Wie beim zweiten Ausführungsbeispiel wird ein ausgangsseitiges Schaltsignal C gebildet, wenn das Sensorsignal s mit dem Ausgangssignal der Funktionsstufe 20 übereinstimmt beziehungsweise dieses erreicht.

Ein Anwendungsfall in der Praxis ist beispielsweise das Ultraschallschweißen mit einer Sonotrode. Bei vielen Schweißvorgängen muss eine Sonotrode zunächst auf Anschlag an das zu schweißende Werkstück gefahren werden, ehe dann beim eigentlichen Schweißvorgang die Sonotrode die zu verschweißenden Werkstücke um einen definierten Abstand Δs zusammendrückt. Im praktischen Aufbau fährt also die Sonotrode zunächst auf die toleranzbehaftete Anschlagposition S3, bei der durch ein Schaltsignal D der eigentliche Schweißvorgang ausgelöst wird. Der Schweißvorgang wird dann bei Erreichen einer Position S3 + Δs abgebrochen. Die Qualität der Verschweißung hängt im Wesentlichen von der Verpressungstiefe Δs ab. Mit dem Ausführungsbeispiel gemäß Figur 3 wird nun das Positionssignal S3 bei Erreichen des Anschlages durch das Signal D gespeichert. Wenn dann die Position S3 + Δs erreicht wird, schaltet der Komparator 16 und erzeugt das Schaltsignal C, durch das der Schweißprozess beendet wird. Hierdurch ist eine Verschweißung mit gleichbleibender Qualität gewährleistet. Das bei Erreichen der Anschlagposition den Speichervorgang auslösende Signal D kann beispielsweise gemäß dem ersten Ausführungsbeispiel erzeugt werden.

Ein weiterer Anwendungsfall für das dritte Ausführungsbeispiel sind kraftabhängige Einpressvorgänge, beispielsweise bei Montageprozessen. Ein Einpressvorgang kann sich dabei typisch in zwei Teilschritten vollziehen. Im ersten Teilschritt wird das entsprechende Teil positioniert und im zweiten Teilschritt dann mit einer bestimmten Kraft eingepresst. Beim ersten Teilschritt entsteht aufgrund von Toleranzen beziehungsweise unterschiedlichen Gegenkräften eine Vorspannkraft S3, die durch den als Drucksensor ausgebildeten Sensor 10 erfasst werden kann. Ausgehend von diesem Druck S3 erfolgt der eigentliche Einpressvorgang dann mit einem zusätzlichen Einpressdruck Δs. Dieser Ablauf lässt sich in einfacher Weise durch das dritte Ausführungsbeispiel realisieren.

Die beschriebenen Sensoranordnungen können in einem Sensormodul integriert sein, das beispielsweise mit einer SPS mit Binäreingang verbunden ist. Alternativ hierzu können auch die elektronischen Komponenten mit Ausnahme des Sensors 10 in einem separaten Gerät oder in der SPS oder einer anderen Steuereinrichtung integriert sein.

Die beschriebenen Funktionsblöcke in den beschriebenen Sensoranordnungen können beispielsweise durch Funktionen in einem Mikrocontroller realisiert sein.

## Patentansprüche

1. Sensoranordnung mit einem einen Messparameter als Sensorsignal (s) erfassenden Sensor (10) und einer das Sensorsignal (s) verarbeitenden Signalverarbeitungseinrichtung, die eine ein Funktionssignal mit einem Vergleichs- oder Schaltwert vergleichende und in Abhängigkeit des Vergleichs ein Schaltsignal erzeugende Schaltstufe (11; 16) sowie eine eine Funktion des Sensorsignals (s) bildende Funktionsstufe (15; 17; 20) enthält, wobei diese Funktion eine zeitliche Ableitung (s', s'') des Sensorsignals (s) oder einen um einen additiven Faktor (Δs) veränderten Sensorsignalwert beinhaltet, und wobei das Ausgangssignal der Funktionsstufe den Vergleichs- oder Schaltwert für die Schaltstufe (11; 16) oder ein Sperr/Durchlasssignal für das Schaltsignal bildet, **dadurch gekennzeichnet, dass** das Funktionssignal das Sensorsignal (s) ist.

2. Sensoranordnung nach Anspruch 1, **dadurch gekennzeichnet, dass** die Schaltstufe (11; 16) als Komparator oder Fensterkomparator ausgebildet ist.

3. Sensoranordnung Anspruch 1 oder 2, **dadurch gekennzeichnet, dass** die Funktionsstufe (15) aus einer die erste oder zweite zeitliche Ableitung (s', s'') des Sensorsignals (s) bildenden Differentialstufe (13) und einer Schwellwertstufe (14) für das Ausgangssignal der Differentialstufe (13) besteht, deren Ausgangssignal das Sperr- und Durchlasssignal bildet.

4. Sensoranordnung nach Anspruch 3, **dadurch gekennzeichnet, dass** eine insbesondere als UND-Glied ausgebildete Sperr- und Durchlassstufe (12) für das Schaltsignal mit dem Sperr/Durchlasssignal als Steuersignal beaufschlagbar ist.

5. Sensoranordnung nach Anspruch 3 oder 4, **dadurch gekennzeichnet, dass** das Ausgangssignal der Schwellwertstufe (14) bei einem Wert der zeitlichen Ableitung (s') unterhalb eines Grenzwerts (k) das Durchlasssignal bildet.

6. Sensoranordnung nach Anspruch 1 oder 2, **dadurch gekennzeichnet, dass** die Funktionsstufe (17) aus einer die zeitliche Ableitung (s') des Sensorsignals (s) bildenden Differentialstufe (18) und einer die Funktion s₀ - k x s' bildenden Teilfunktionsstufe (14) besteht, wobei das Ausgangssignal der Funktionsstufe (17) den Vergleichs- oder Schaltwert bildet und wobei s₀ ein vorgebbarer Messparameter-Grenzschaltwert und k ein vorgebbarer Faktor ist.

7. Sensoranordnung nach Anspruch 1 oder 2, **dadurch gekennzeichnet, dass** die Funktionsstufe (20) aus einer Speicherstufe (21) für das Sensorsignal (s) zu einem vorgebbaren Zeitpunkt und einer Additionsstufe (22) zur Addition des in der Speicherstufe (21) gespeicherten Sensorsignals (s3) mit einem Offsetwert (Δs) besteht, wobei das Ausgangssignal der Funktionsstufe (20) den Vergleichs- oder Schaltwert bildet.

8. Sensoranordnung nach Anspruch 7, **dadurch gekennzeichnet, dass** das Ausgangssignal einer das Erreichen eines vorbestimmten Messparameters detektierenden Vorrichtung das Triggersignal (D) für den Sensorsignal-Speichervorgang in der Speicherstufe (21) bildet.

9. Sensoranordnung nach einem der vorhergehenden Ansprüche, **dadurch gekennzeichnet, dass** der Messparameter eine Position oder Bewegung oder ein Druck oder eine Kraft oder ein Durchfluss ist.

## Claims

1. Sensor assembly with a sensor (10) detecting a measuring parameter as a sensor signal (s) and with a signal processing device processing the sensor signal (s) and comprising a switching stage (11; 16), which compares a function signal to a comparative or switching value and generates a switching signal in dependence on this comparison, and a function stage (15; 17; 20), which forms a function of the sensor signal (s), wherein the said function includes a time derivative (s', s") of the sensor signal (s) or a sensor signal value changed by an additive factor (Δs) and wherein the output signal of the function stage represents the comparative or switching value for the switching stage (11; 16) or an off-state/on-state signal for the switching signal, **characterised in that** the function signal is the sensor signal (s).

2. Sensor assembly according to claim 1, **characterised in that** the switching stage (11; 16) is designed as a comparator or window comparator.

3. Sensor assembly according to claim 1 or 2, **characterised in that** the function stage (15) comprises a differential stage (13) representing the first or second time derivative (s', s") of the sensor signal (s) and a threshold stage (14) for the output signal of the differential stage (13), the output signal of which forms the off-state and on-state signal.

4. Sensor assembly according to claim 3, **characterised in that** the off-state/on-state signal can be applied as a control signal to an off-state and on-state stage (12) designed in particular as an AND element for the switching signal.

5. Sensor assembly according to claim 3 or 4, **characterised in that** the output signal of the threshold stage (14) forms the on-state signal at a time derivative value (s') below a limit value (k).

6. Sensor assembly according to claim 1 or 2, **characterised in that** the function stage (17) comprises a differential stage (18) forming the time derivative (s') of the sensor signal (s) and a subfunction stage (14) forming the function s₀ = k x s', wherein the output signal of the function stage (17) forms the comparative or switching value and wherein s₀ is a presettable measuring parameter limit switching value and k is a presettable factor.

7. Sensor assembly according to claim 1 or 2, **characterised in that** the function stage (20) comprises a memory stage (21) for the sensor signal (s) at a presettable time and an addition stage (22) for adding to the sensor signal (s₃) stored in the memory stage (22) an offset value (Δs), wherein the output signal of the function stage (20) forms the comparative or switching value.

8. Sensor assembly according to claim 7, **characterised in that** the output signal of a device detecting the reaching of a preset measuring parameter forms the trigger signal (D) for the storage of the sensor signal in the memory stage (21).

9. Sensor assembly according to any of the preceding claims, **characterised in that** the measuring parameter is a position or a movement or a pressure or a force or a flow rate.

## Revendications

1. Système de détection comportant un capteur (10) acquérant un paramètre de mesure en tant que signal de capteur (s) et un dispositif de traitement du signal traitant le signal de capteur (s), qui comprend un étage de commutation (11 ; 16) comparant un signal de fonction avec une valeur de comparaison ou de commutation et générant un signal de commutation en fonction de la comparaison, ainsi qu'un étage de fonction (15 ; 17 ; 20) formant une fonction du signal de capteur (s), ladite fonction contenant une dérivée temporelle (s', s") du signal de capteur (s) ou une valeur de signal de capteur modifiée d'un facteur additif (Δs) et le signal de sortie de l'étage de fonction formant la valeur de comparaison ou de commutation pour l'étage de commutation (11 ; 16) ou un signal de blocage / de passage pour le signal de commutation, **caractérisé en ce que** le signal de fonction est le signal de capteur (s).

2. Système de détection selon la revendication 1, **caractérisé en ce que** l'étage de commutation (11 ; 16) est conçu sous forme de comparateur ou de comparateur à fenêtre.

3. Système de détection selon la revendication 1 ou 2, **caractérisé en ce que** l'étage de fonction (15) se compose d'un étage différentiel (13) formant la première ou seconde dérivée temporelle (s', s") du signal de capteur (s) et d'un étage de valeur de seuil (14) pour le signal de sortie de l'étage différentiel (13), dont le signal de sortie forme le signal de blocage et de passage.

4. Système de détection selon la revendication 3, **caractérisé en ce qu'**un étage de blocage et de passage (12) réalisé en particulier sous forme d'élément ET pour le signal de commutation peut être soumis à l'influence du signal de blocage / de passage en tant que signal de commande.

5. Système de détection selon la revendication 3 ou 4, **caractérisé en ce que** le signal de sortie de l'étage de valeur de seuil (14) forme le signal de passage dans le cas d'une valeur de la dérivée temporelle (s') en dessous d'une valeur limite (k).

6. Système de détection selon la revendication 1 ou 2, **caractérisé en ce que** l'étage de fonction (17) se compose d'un étage différentiel (18) formant la dérivée temporelle (s') du signal de capteur (s) et d'un étage de sous-fonction (14) formant la fonction s₀ - k x s', le signal de sortie de l'étage de fonction (17) formant la valeur de comparaison ou de commutation et s₀ étant une valeur de commutation limite du paramètre de mesure spécifiable et k un facteur spécifiable.

7. Système de détection selon la revendication 1 ou 2, **caractérisé en ce que** l'étage de fonction (20) se compose d'un étage de mémorisation (21) pour le signal de capteur (s) à un instant spécifiable et d'un étage d'addition (22) destiné à l'addition du signal de capteur (s3) mémorisé dans l'étage de mémorisation (21) avec une valeur de décalage (Δs), le signal de sortie de l'étage de fonction (20) formant la valeur de comparaison ou de commutation.

8. Système de détection selon la revendication 7, **caractérisé en ce que** le signal de sortie d'un dispositif détectant l'atteinte d'un paramètre de mesure prédéfini forme le signal de déclenchement (D) pour le processus de mémorisation du signal de capteur dans l'étage de mémorisation (21).

9. Système de détection selon l'une des revendications précédentes, **caractérisé en ce que** le paramètre de mesure est une position ou un déplacement ou une pression ou une force ou un débit.
